# EUROPEAN PATENT SPECIFICATION

(11) **EP 1 511 597 B1**
(45) Date of publication and mention of the grant of the patent: **27.07.2005**
(21) Application number: 03719070.9
(22) Date of filing: 06.02.2003
(51) Int. Cl.: B24B 9/16

(54) **LASER DIAMOND BLOCKING MACHINE FOR FACETING THE BOTTOM OF THE DIAMOND**
LASERDIAMANTKONFEKTIONIERUNGSMASCHINE ZUR FACETTIERUNG DER UNTERSEITE DES DIAMANTEN
MACHINE LASER DE TAILLE EN CROIX DE DIAMANT DESTINEE A TAILLER LES FACETTES DE LA CULASSE DU DIAMANT

(30) Priority: 03.04.2002 IN MU03152002
(43) Date of publication of application: 09.03.2005
(73) Proprietor: Patel, Arvindbhai Lavjibhai, 380 025 Ahmedabad (IN)
(72) Inventor: Patel, Arvindbhai Lavjibhai, 380 025 Ahmedabad (IN)
(74) Representative: Brants, Johan Philippe Emile
(86) International application number: PCT/IN2003/000020
(87) International publication number: WO 2003/083186

(56) References cited:
- EP-A2- 0 313 369
- US-A- 5 058 324
- US-A- 5 816 896

## Description

### Technical Field

The present invention relates to LASER DIAMOND BLOCKING MACHINE FOR FACETING THE BOTTOM OF A DIAMOND. With the top of the diamond, bottom of the diamond is equally important to give shape to the diamond. Blocking is a process to facet the bottom of the diamond. According to the state of art faceting of the diamond is done manually with the help of diamond. A diamond blocking machine comprising a sliding unit, a lifting unit, a revolving unit and an indexing und is known from US-A-5 058 324. This document describes also the possibility of automated operation by movement control means and a programmed control system.

### Background Art

The present blocking machine is used to facet the bottom of the diamond with help of laser. Mechanically this machine consists of four units.
a. Sliding unit
b. Lifting unit
c. Revolving unit
d. Indexing unit

Parts repeatedly used in all four machines are:
1. Base plate : to mount a motor or other components
2. Clamp : to support the shaft
3. Shaft : for relative movement
4. Ball bush housing : for friction free movement
5. Pin & Stud : for fitting purpose
6. Lever : to joint two units
7. Spacer: kept between bearings
S. Back Patti : to restrict the movement limit
9. Spring : for compressive fitting of parts
10. Ball bush & Ball Bearings : for horizontal or vertical or rotary movement
11. Self align bearing : to control the movement diversion, if any
12. Circlip support bearing
13. Check nut & Lock nut : for prevention of components from falling down

### Disclosure of the Invention:

The present invention will be described with greater specific and clarity with reference following drawings :

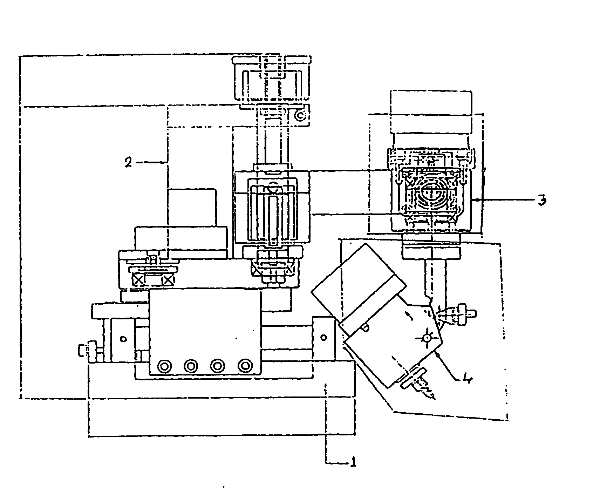

**Fig. 1.** represents the front view of the machine
**Fig. 2.** represents the lay out of the machine showing parts of the machine

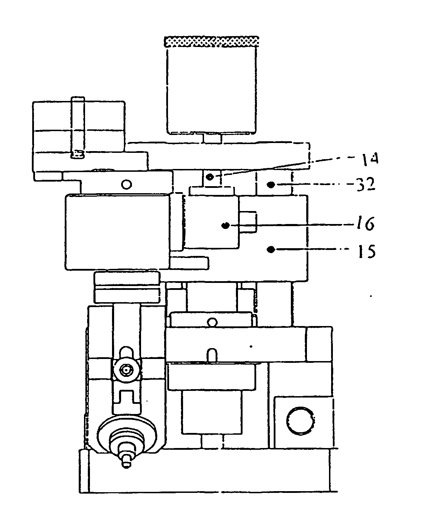

**Fig. 3.** the lay out of the machine showing parts of

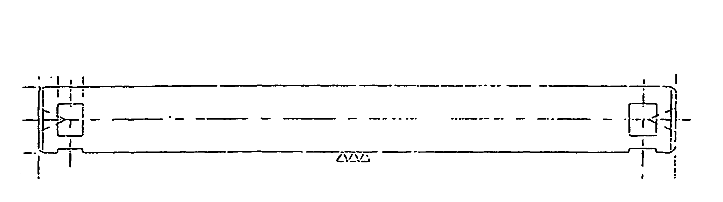

**Fig. 4** represents the shaft

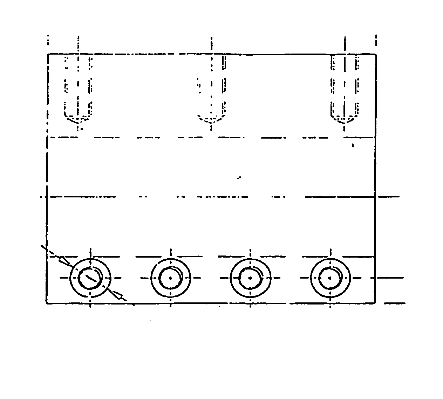

**Fig. 5.** represents the ball bush housing

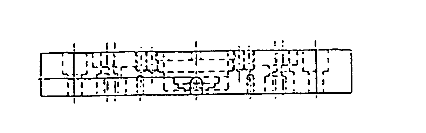

**Fig. 6.** represents the sliding plate

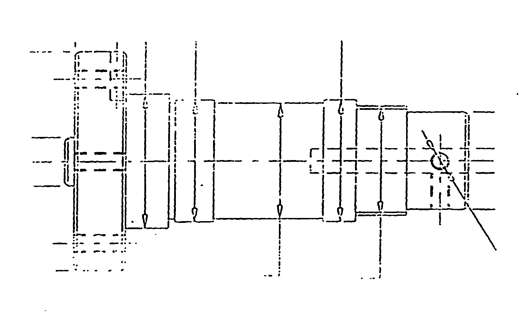

**Fig. 7.** represents the motor shaft

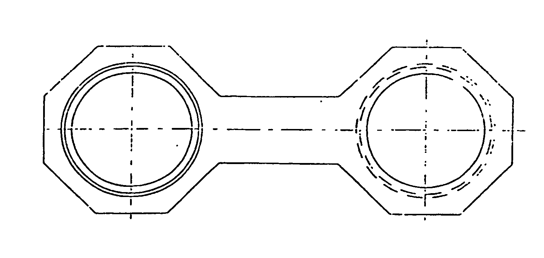

**Fig. 8.** represents the lever

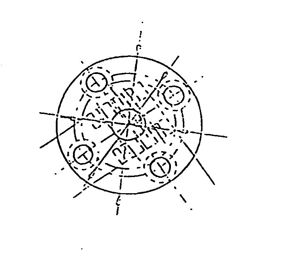

**Fig. 9.** represents the ball bearing

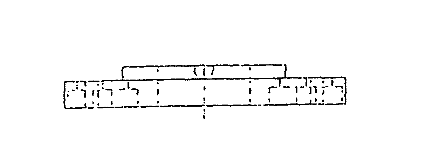

**Fig. 10.** represents the motor plate

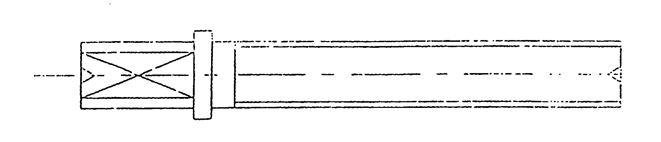

**Fig. 11.** represents the threaded stud

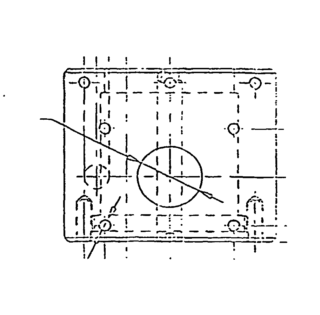

**Fig. 12** represents the bearing holder

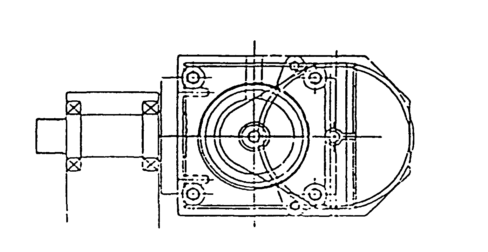

**Fig. 13.** represents the motor

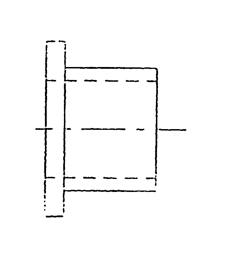

**Fig. 14.** represents the brass rivet

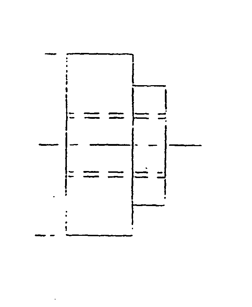

**Fig. 15.** represents the brass bush

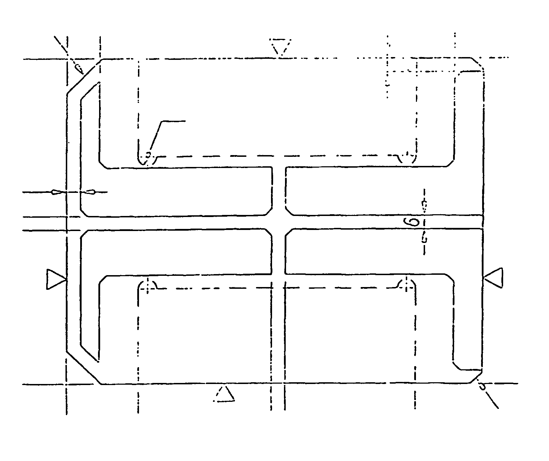

**Fig. 16.** represents the base plate

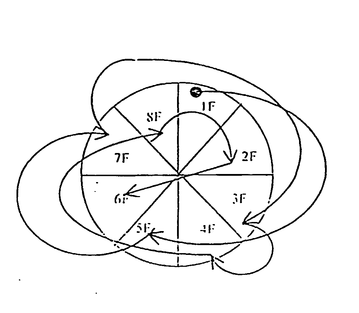

**Fig. 17.** represents the direction of the rotation of the facet.

Sliding unit *1* as a whole is mounted on base plate *26.* On base plate *26,* two shafts *27* by two ball bearings *28 & 29* are fitted. Two shafts *27* guide entire sliding unit *1*. On each shaft *27* slider bush *5 & 6* is placed for friction-free movement. Ball bush housing *7* smoothens the movement of the slider *8*. A motor *9* is mounted on a motor mounting plate *10.* Motor shaft *11* is attached to slider *8.* Self aligned bearing is placed into the lever *12.*

In Lifting unit *2* lifting motor *13* is fitted below the motor mounting plate *10* of the sliding unit *1*. Shaft *32* is fixed to motor mounting plate *10* by a screw, slit and deep groove bearing. Ball bush housing *7* is protected by steel cover. At the bottom of steel cover, thrust bearing is placed with its holder where motor shaft is fitted. Inside the thrust bearing holder there is thread screw for lifting action. Threaded stud *14* has threads along its ID and ball bush housing *15* is kept for smooth movement of stud *14*. Inside the stud *14,* steel ball is placed for the bottom limit. Ball bush housing *15* is attached with lever *16* at *90* degree. Lever *16* is an interface for ball bush housing *15* and revolving unit *3*. Spring is placed to fit diamond. Spacer *17* supports both, motor mounting plate *10* and top plate *18.*

In Revolving unit *3* also there is a motor *19* for the rotation of the unit. Motor *19* is fitted on the base plate *20*. Motor shaft *21* is locked by a grub screw. In the bearing holder *22* two bearings are there. Two friction spacers are there, one for inner and one for outer race of bearing. Check nut holds the bearing- *1* nut each for both the bearings. Check nut and lock nut hold the shaft and prevent from falling down.

Collate *31* is mounted on indexing unit *4* that holds the die *23.* Polishing angle scale contains brass knob assembly with stud, bush *24 &* rivet *25*. Polishing angles set by brass knob and spring is to maintain the set angle.

Weight control unit compensates the natural weight of machine that directly acts upon diamond during polishing. This unit is placed on lifting unit *1*. In this machine weight control knob, weight control spring and weight scale *30* are there to see the weight of the machine, acts upon diamond.

In Electronic assembly there is a common power supply for all four units, power supply provides electricity to control panel & sensors. It has battery back-up so that whenever power fails, it gives power failure signal to the control panel. Control panel consists a driver for all the units' motor. It generates command signal for LCD & LED to display the status of diamond regularly. Keypad is attached with control panel. For the control panel, a program is also designed.

The present invention of blocking machine is to facet the bottom of the diamond. Sliding unit is for horizontal movement of *22* to *26* mm of die. The lifting unit is for the vertical movement of die upto *15* mm. Indexing unit changes facet automatically as per number of facet selected through control panel. Motor changes the facet.

In the sliding unit cam mechanism with two bearings converts the rotating motion into linear motion. The lifting unit lifts up and down the unit when it is needed to change the polishing direction or facet to remove unwanted scratch on the diamond. To find out grain structure of the diamond, revolving unit changes the polishing direction. System tries to polish diamond in one direction if grain matches: If grain structure does not matches, it changes polishing direction through revolving unit. Indexing unit changes the facet automatically as per the number of facet selected through control panel.

LCD (liquid crystal unit) displays the status of diamond, set parameters, function and selection parameter of system, also display message if it found any faulty direction in system. LCD also works as a bridge between operator and system and LED (light emitting diode) shows currently which facet is polishing, which facet have been polished and status of remaining facet. After completion of diamond polish the LED on control panel as well as on the top of the unit indicates that the diamond is over.

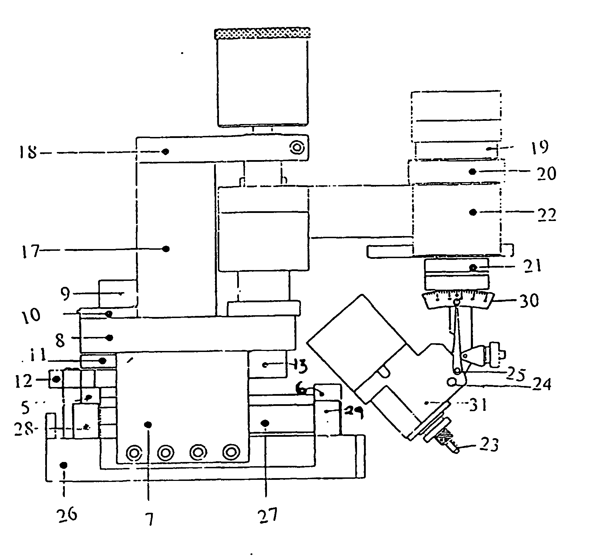

When die is fitted on blocking machine, control unit is used to decide the point of start. For this operator has to set the parameters according to the requirement of the program of the control panel. These parameters are set through keypad and LCD. For on-line faceting LEDs are there in the machine-one LED for each facet. First, first facet starts and then machine can change "Chall" itself for the perfect faceting. After faceting the first facet, fifth facet comes, then seventh and third facet will come. Thus odd facets are chosen first and then even facets will be chosen. This is shown very well in the figure 2. "Chall" time can be set from *1* second to *60* seconds. This time setting depends on the type and size of diamond

## Claims

1. A laser diamond blocking machine for faceting the bottom of the diamond comprising four major units (a),(b),(c) and (d) and two other units (e) and (f), wherein
(a) a sliding unit (1) is mounted on a first base plate (26), two shafts (27) by two ball bearings (28 & 29) are fitted on it to guide the entire sliding unit (1) and slider bushes (5, 6) are placed for friction-free movement of each shaft (27), and a first ball bush housing (7) is provided for smoothening the movement of a slider (8), a first motor (9) is mounted on a motor mounting plate (10), a motor shaft (11) is attached to said slider (8) and a self aligned bearing is placed into a first lever (12);
(b) a lifting unit (2) comprises a lifting motor (13) that is fitted below said motor mounting plate (10) of said sliding unit (1), a shaft (32) is fixed to the motor mounting plate (10) by a screw, slit and deep groove bearing, said first ball bush housing (7) is protected by a steel cover, at the bottom of steel cover, a thrust bearing is placed with its holder where said motor shaft is fitted, inside said thrust bearing holder there is a thread screw for lifting action, a threaded stud (14) has threads along its ID and a ball bush housing (15) is kept for smooth movement of said stud (14), inside said stud (14) a steel ball is placed for the bottom limit, said ball bush housing (15) is attached with a second lever (16) at 90 degree, said second lever (16) is an interface for said ball bush housing (15) and a revolving unit (3), a spring is placed to fit the diamond, and a spacer (17) supports said motor mounting plate (10) and a top plate (18);
(c) said revolving unit (3) comprising a motor (19) that is fitted on a second base plate (20), a motor shaft (21) is locked by a grub screw, in a bearing holder (22) two bearings and two friction spacers are provided, and a check nut holds the bearing - one nut each for both the bearings;
(d) an indexing unit (4) holds a die (23) and is adapted to change the facet automatically as per program design and number of facet selected through a control panel;
(e) a weight control unit is placed on said lifting unit (2) and comprises a weight control knob, a weight control spring and a weight scale (30) so as to see the weight of the machine, that acts upon diamond;
(f) an electronic assembly comprises a common power supply for all four major said units, power supply provides electricity to said control panel and sensors, said control panel comprises a driver for all the units motors and generates command signals for LCD and LED to display the status of the diamond regularly, a keypad is attached to said control panel, and a program is also designed for said control panel.

2. A laser diamond blocking machine as claimed in claim 1, wherein a back patti is used to restrict the limit of said sliding unit.

3. A laser diamond blocking machine as claimed in claim 1 or 2, wherein said LCD displays the status of the diamond, set parameters, function and selection parameter of system and display message.

4. A laser diamond blocking machine as claimed in any of claims 1 to 3, wherein said sliding unit is for horizontal movement of die up to 22 to 26 mm.

5. A laser diamond blocking machine as claimed in any of claims 1 to 4, wherein the lifting unit is for the vertical movement of die up to 15 mm.

6. A laser diamond blocking machine according to any of claims 1 to 5, wherein said power supply has a battery backup, so that whenever power fails, it gives a power failure signal to said control panel.

## Patentansprüche

1. Laser-Diamantkonfektionierungs-Maschine ("Blocking-Machine") zum Facettieren der Unterseite des Diamanten, mit vier Haupteinheiten (a), (b), (c), (d) und zwei weiteren Einheiten (e) und (f), wobei:
(a) eine Verschiebungseinheit (1) auf einer ersten Basisplatte (26) montiert ist, zwei Wellen (27) mittels zwei Kugellagern (28 & 29) auf ihr befestigt sind, um die gesamte Verschiebungseinheit (1) zu führen, und Gleitbüchsen (5 & 6) für eine reibungsfreie Bewegung jeder Welle (27) angeordnet sind, und ein erstes Kugelhülsengehäuse (7) vorgesehen ist, um die Bewegung eines Verschiebungsteils (8) leichtgängig zu machen, ein erster Motor (9) auf der Motorbefestigungsplatte (10) montiert ist, eine Motorwelle (11) an dem Verschiebungsteil (8) angeschlossen ist, und ein selbstausrichtendes Lager in einem ersten Hebel (12) platziert ist;
(b) eine Hebeeinheit (2) einen Hebemotor (13) aufweist, der unter der Motorbefestigungsplatte (10) der Verschiebungseinheit (1) befestigt ist, eine Welle (32) an der Motorbefestigungsplatte (10) durch eine Schraube, einen Schlitz und eine tiefe Lagernut befestigt ist, das erste Kugelhülsengehäuse (7) durch eine Stahlabdeckung geschützt ist, an der Unterseite der Stahlabdeckung ein Axialdrucklager mit seinem Halter dort angeordnet ist, wo die Motorwelle befestigt ist, innerhalb des Axialdrucklagerhalters eine Gewindeschraube für die Hebeaktion vorhanden ist, eine Gewindespindel (14) ein Gewinde entlang ihres ID besitzt und ein Kugelhülsengehäuse (15) für eine leichtgängige Bewegung der Spindel (14) gehalten wird, innerhalb der Spindel (14) eine Stahlkugel für den unteren Anschlag platziert ist, das Kugelhülsengehäuse (15) mit einem zweiten Hebel (16) bei 90° verbunden ist, der zweite Hebel (16) eine Verbindungsstelle für das Kugelhülsengehäuse (15) und die Dreheinheit (3) ist, eine Feder angeordnet ist, um den Diamanten zu befestigen und ein Abstandshalter (17) die Motorbefestigungsplatte (10) und eine obere Platte (18) unterstützt;
(c) die Dreheinheit (3) einen Motor (19) aufweist, der auf einer zweiten Basisplatte (20) befestigt ist, eine Motorwelle (21) durch eine Blindschraube befestigt ist, in einem Lagerhalter (22) zwei Lager und zwei Reibungsabstandshalter vorgesehen sind, und eine Gegenmutter das Lager festhält - eine Mutter für beide Lager;
(d) eine Umschaltungseinheit (4) ein Schneidwerkzeug (23) hält und dafür angepaßt ist, die Facette automatisch gemäß einer Programmauslegung und einer Anzahl von über ein Bedienfeld ausgewählter Facetten zu wechseln;
(e) eine Gewichtssteuereinheit auf der Hebeeinrichtung (2) plaziert ist und einen Gewichtssteuerknopf, eine Gewichtssteuerfeder und eine Gewichtsskala (30) enthält, um das Gewicht der Maschine zu sehen, das auf den Diamanten einwirkt;
(f) eine elektronische Anordnung eine gemeinsame Stromversorgung für alle vier Haupteinheiten enthält, die Energieversorgungseinheit Elektrizität an das Bedienungsfeld und Sensoren liefert, das Steuerfeld einen Treiber für die Motoren aller Einheiten aufweist, und Befehlssignale für LCD und LED erzeugt, um den Status des Diamanten regelmäßig anzuzeigen, eine Tastatur an dem Bedienungsfeld angebracht ist und ein Programm ebenfalls für das Bedienungsfeld ausgelegt ist.

2. Laser-Diamantkonfektionierungs-Maschine zum Facettieren der Unterseite des Diamanten nach Anspruch 1, wobei ein "*back patti*" dazu verwendet wird, den Anschlag der Verschiebungseinheit zu begrenzen.

3. Laser-Diamantkonfektionierungs-Maschine zum Facettieren der Unterseite des Diamanten nach Anspruch 1 oder 2, wobei die LCD den Zustand des Diamanten, eingestellte Parameter, Funktions- und Auswahlparameter des Systems und Anzeigemeldungen darstellt.

4. Laser-Diamantkonfektionierungs-Maschine zum Facettieren der Unterseite des Diamanten nach einem der Ansprüche 1 bis 3, wobei die Verschiebeeinheit für eine horizontale Bewegung des Schneidwerkzeugs bis zu 22 - 26 mm ausgelegt ist.

5. Laser-Diamantkonfektionierungs-Maschine zum Facettieren der Unterseite des Diamanten nach einem der Ansprüche 1 bis 4, wobei die Hebeeinheit für die vertikale Bewegung des Schneidwerkzeugs bis zu 15 mm ausgelegt ist.

6. Laser-Diamantkonfektionierungs-Maschine zum Facettieren der Unterseite des Diamanten nach einem der Ansprüche 1 bis 5, wobei die Energieversorgung eine Batteriereserve besitzt, so daß diese, sobald die Stromversorgung ausfällt, ein Stromausfallsignal an das Bedienungsfeld ausgibt.

## Revendications

1. Machine laser de taille en croix de diamant destinée à tailler les facettes de la culasse du diamant comprenant quatre unités principales (a), (b), (c), (d) et deux autres unités (e) et (f), dans laquelle
(a) une unité coulissante 1 est montée sur une première plaque de base (26), deux arbres (27) sont montés par deux roulements à billes (28 & 29) sur celle-ci pour guider toute l'unité coulissante (1) et des manchons coulissants (5 & 6) sont placés, pour le déplacement sans frottement de chaque arbre (27), et un premier logement de manchon à billes (7) est prévu pour régulariser le déplacement d'un coulisseau (8), un premier moteur (9) est monté sur une plaque support de moteur (10), un arbre moteur (11) est fixé audit coulisseau (8) et un roulement à alignement automatique est placé dans un premier levier (12) ;
(b) une unité de levage (2) comprend un moteur de levage (13) qui est monté en dessous de ladite plaque support de moteur (10) de ladite unité coulissante (1), un arbre (32) est fixé à la plaque de fixation de moteur (10) par un palier à vis, à fente et à rainure profonde, ledit premier logement de manchon à billes (7) est protégé par un couvercle en acier, un palier de butée est placé avec son support où ledit arbre moteur est monté, au bas du couvercle en acier, une vis filetée pour action de levage est prévue à l'intérieur dudit support de palier de butée, un goujon fileté (14) comporte des filets le long de son diamètre intérieur et un logement de manchon sphérique (15) est maintenu pour le déplacement régulier dudit goujon (14), une bille en acier est placée à l'intérieur dudit goujon (14) pour la limite inférieure, ledit logement de manchon sphérique (15) est fixé avec un deuxième levier (16) à 90 degrés, ledit deuxième levier (16) constitue une interface pour le logement de manchon sphérique (15) et une unité rotative (3), un ressort est prévu pour adapter le diamant et un espaceur (17) supporte ladite plaque de fixation de moteur (10) et une plaque supérieure (18) ;
(c) ladite unité rotative (3) comporte un moteur (19) qui est monté sur une deuxième plaque de base (20), un arbre moteur (21) est verrouillé par une vis sans tête, deux paliers et deux espaceurs anti-frottement sont prévus dans un support (22) de paliers, un écrou de serrage maintient les paliers - un écrou pour les deux paliers ;
(d) une unité d'indexation (4) maintient une matrice (23) et est adapté pour changer automatiquement la facette selon le dessin programmé et le numéro de facette choisi par un tableau de commande ;
(e) une unité de régulation du poids est prévue sur ladite unité de levage (2) et comprend un bouton de régulation du poids, un ressort de régulation du poids et une échelle de poids (30), prévus pour permettre de voir le poids de la machine qui agit sur le diamant ;
(f) un ensemble électronique comprend une alimentation électrique commune des quatre unités principales, cette alimentation électrique des unités fournit de l'électricité audit tableau de commande et à des détecteurs, ledit tableau de commande comprend un système d'entraînement des moteurs des unités et émet des signaux d'instruction pour que l'écran à cristaux liquides et les diodes électroluminescentes affichent régulièrement l'état du diamant, un clavier est connecté audit tableau de commande pour ce tableau de commande et un programme est également conçu.

2. Machine laser de taille en croix de diamant destinée à tailler les facettes de la culasse du diamant selon la revendication 1, dans laquelle une plaque arrière est utilisée pour restreindre la limite de ladite unité coulissante.

3. Machine laser de taille en croix de diamant destinée à tailler les facettes de la culasse du diamant selon la revendication 1 ou 2, dans laquelle ledit écran à cristaux liquides affiche l'état du diamant, les paramètres réglés, le paramètre de fonctionnement et de sélection du système et affiche un message.

4. Machine laser de taille en croix de diamant destinée à tailler les facettes de la culasse du diamant selon l'une quelconque des revendications 1 à 3, dans laquelle ladite unité coulissante est pour le déplacement horizontal de la matrice jusqu'à 22 à 26 mm.

5. Machine laser de taille en croix de diamant destinée à tailler les facettes de la culasse du diamant selon l'une quelconque des revendications 1 à 4, dans laquelle l'unité coulissante est pour le déplacement vertical de la matrice jusqu'à 15 mm.

6. Machine laser de taille en croix de diamant destinée à tailler les facettes de la culasse du diamant selon l'une quelconque des revendications 1 à 5, dans laquelle ladite alimentation électrique comporte une batterie de secours, de sorte que si l'alimentation est en panne, celle-ci transmet un signal de panne d'alimentation à ledit tableau de commande.
